## Europäisches Patentamt

## European Patent Office

## Office européen des brevets

(19)

(11) Publication number: **0 252 555 B1**

(12)

# EUROPEAN PATENT SPECIFICATION

(45) Date of publication of the patent specification:
08.08.90

(51) Int. Cl.⁵: **A01B 49/00**, A01B 73/04

(21) Application number: **87201219.0**

(22) Date of filing: **25.06.87**

(54) A soil cultivating machine.

(30) Priority: **26.06.86 NL 8601676**

(43) Date of publication of application:
**13.01.88 Bulletin 88/2**

(45) Publication of the grant of the patent:
**08.08.90 Bulletin 90/32**

(84) Designated Contracting States:
**DE FR GB**

(56) References cited:
**BE-A- 515 898**
**DE-A- 3 334 472**
**FR-A- 2 174 911**
**GB-A- 2 155 745**
**US-A- 4 074 766**
**US-A- 4 535 848**

(73) Proprietor: **C. van der Lely N.V., Weverskade 10 P.O. Box 26, NL-3155 ZG Maasland(NL)**

(72) Inventor: **Van der Lely, Ary, 10A, Weverskade, Maasland(NL)**
Inventor: **Bom, Cornelis Johannes G., 16, Laan van Nieuw Rozenburg, Rozenburg(NL)**

(74) Representative: **Mulder, Herman et al, Octrooibureau Van der Lely N.V. Weverskade 10 P.O. Box 26, NL-3155 ZG Maasland(NL)**

ACTORUM AG

## Description

The invention concerns a soil cultivating machine comprising a frame wherein a plurality of rotary soil working members are supported that are arranged in side-by-side relationship, which frame includes a trestle for coupling the machine to the three-point lifting hitch of a tractor, whilst behind the trestle there is arranged at least one pivotal coupling member for combination of the machine with a further implement, the said coupling member being adjustable in height by means of an adjusting cylinder and the adjusting cylinder end connected to said pivotal coupling member being capable of limited movement relative to the said member.

With soil cultivating machines of this kind as known from the U.K. patent application 2 155 745 the said further implement e.g. a seed drill or planting machine can travel independently of the machine during operation, so that the latter does not exercise any disturbing influence on the implement in operation. However it has been found that when the combination is transported or brought from a transport position into an operative position the presence of a slotted groove constituting part of the connection between the adjusting cylinder and the pivotal coupling member may cause undesired chocks owing to the weight of the said further implement so that there is a risk of damage and deformation. Now, using the construction according to the invention, the assembly can be transported or brought into the operative position without the occurance of said chocks due to the fact that the connection between the adjusting cylinder and the pivotal coupling member includes a slot which is present at the end of the adjusting cylinder and is adapted to cooperate with a pin on the pivotal coupling member and a stop is provided freely pivotally on the relevant end of said adjusting cylinder with the aid of which a movement of the relevant end of the adjusting cylinder with respect to the coupling member is counteracted. Thus the combination can be transported or brought gradually into the operative position without the presence of the slotted groove in the connection between the adjusting cylinder and the pivotal coupling member causing any undesired effects.

The U.S. patent 4 074 766 relates to a farm implement tool bar including a main frame section having a wing section pivotally connected thereto and operated by a hydraulic cylinder. The pivotal connection between the hydraulic cylinder and the wing section includes a lost motion connection to allow the wing section to float above and below the horizontal when the wing section is in its extended position. In order to achieve this the end of the cylinder connected to the wing section is provided with a slot that can cooperate with a pin on the wing section. Additionally there are cooperative parts on the corresponding end of the hydraulic cylinder and the wing section to prevent any damage that can occur when the wing section is brought into an operative position. The said cooperating parts comprise a pin on the corresponding end of the hydraulic cylinder and a curved slot on the wing section constituting a rather complicated and expensive construction.

For a better understanding of the invention and to show how the same may be carried into effect, reference will now be made, by way of example, to the accompanying drawings, in which:

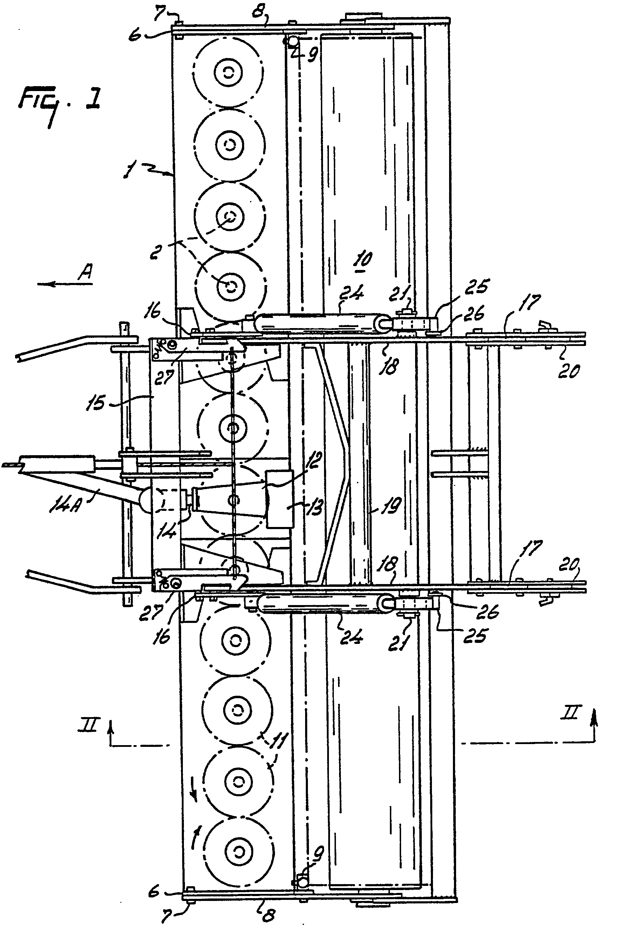

Figure 1 is a plan view of a soil cultivating machine having a construction according to the invention;

Figure 2 is, to an enlarged scale, a view taken along the line II-II in Figure 1, the combination being in an operative position, and

Figure 3 is a view in accordance with Figure 2, wherein the implement, combined with the machine, has been brought into a transport position.

The arrangement shown in the drawings concerns a soil cultivating machine, in particular one for preparing a seed bed.

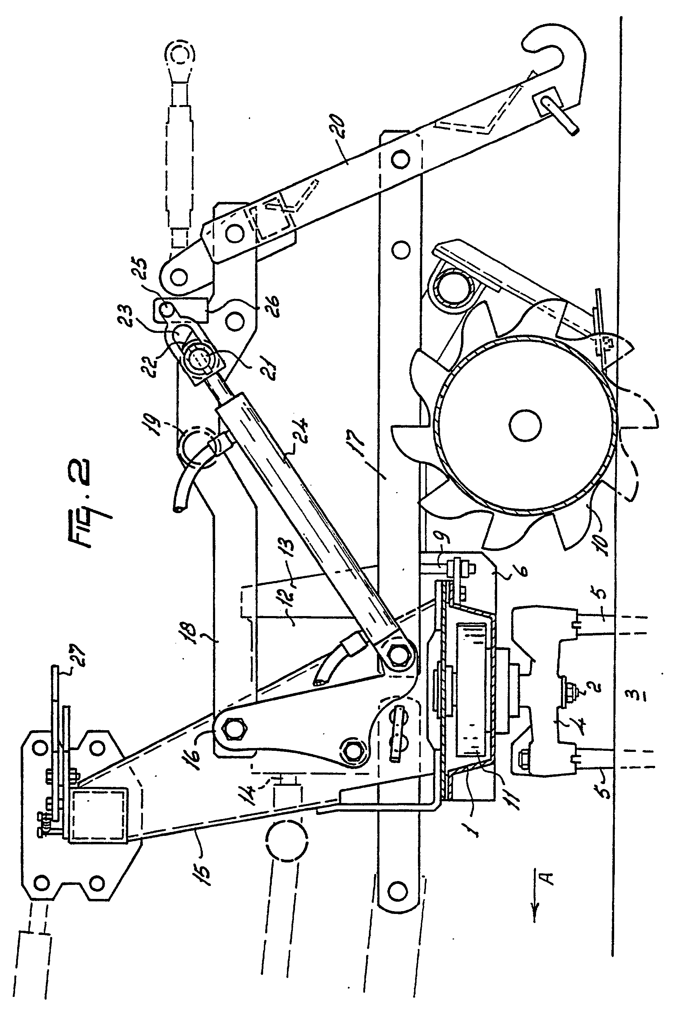

The machine comprises a box-like frame portion 1 which extends transversely to the direction of operative travel A and in which are bearing-supported, spaced apart equidistantly by preferably 25 cms, the upwardly, preferably vertically, extending shafts 2 of soil working members 3. Each of the soil working members 3 includes a carrier 4 which is mounted on that end of a shaft 2 projecting from the bottom of the frame portion 1 and near each of its ends is provided with a downwardly extending soil working element 5 which, in this embodiment, is designed as a tine. Near the ends, the frame portion 1 is closed by plates 6 which extend at least substantially parallel to the direction of operative travel A and reach to above the box-like frame portion. Near its front side, each of the plates 6 has a pin 7 which extends transversely to the direction of operative travel A and about which is freely pivotal an arm 8 extending rearwardly along the inner side of the plates·6. Between the rear side of the frame portion 1 and an arm 8 there is arranged an adjusting mechanism 9, by means of which the arm can be moved in height about the pin 7 and can be locked in a plurality of positions. The rear ends of the arms 8 support a freely rotatable roller 10, the longitudinal centre line of which extends at least substantially transversely to the direction of operative travel A. The roller 10 is designed as a packer roller; however, the roller may also be in the form of a cage roller. Within the frame portion 1, each of the shafts 2 of a soil working member 3 is provided with a pinion 11, the arrangement being such that adjoining pinions are in driving connection with each other. Near the centre of the frame portion 1, the shaft 2 of a soil working member 3 is extended upwardly and by means of this extension reaches to into a gear box 12 disposed on the top side of the frame portion 1. Inside the gear box 12, the said extension is in driving connection via a conical gear wheel transmission and a speed variator 13, located at the rear side of the gear box, with a shaft 14 which extends in the direction of operative travel A and projects at the front side from said gear box. The said shaft 14 can be coupled to the power take-off shaft of a tractor via an intermediate shaft 14A. A trestle 15, which is substantially in the shape of a U, is disposed near the front side of the frame portion 1, the gear box 12 being located between the downwardly extending legs of the U. At its front side, the trestle 15 includes a three-point connection for coupling the machine to the three-point lifting hitch of a tractor. At the rear side of each of the – taken in the direction of operative travel A – substantially vertically extending legs of the U-shaped trestle 15 there are provided freely pivotal, rearwardly extending arms 17 and 18 at some interspace one above the other by means of a support 16. The rear halves of the upper arms 18 have an upwardly curved portion which occupies approximately one quarter of the length of an arm 18 and starts immediately behind the middle thereof. At their front sides, the curved portions are interconnected by means of a cross-beam 19. The rearmost portion of each of the respective arms 18 and 17 is provided with two spaced-apart apertures for detachably accommodating a trestle 20 in two different positions (see Figure 2). This trestle 20, which includes a three-point connection, assumes a forwardly inclined position when, during operation, it supports an other implement, e.g. a seed drill or a planter.

The rear side of the curved portion of each arm 18 is fitted with a pin 21 having a shoulder 22. The pin 21 is applied, freely movably, in a slot 23 in a flat end portion of the piston rod of a double-acting hydraulic adjusting cylinder 24, which has its other end disposed pivotally in the connection point of the lower arm 17 on the support 16. A downwardly extending, freely pivotal stop 26 in the shape of a strip is fitted on a pin 25 on the free end of the flat end portion of the adjusting cylinder 24. The strip-shaped stop 26 has a length that is at least substantially equal to that of the slot 23 less the diameter of the shoulder 22 on the pin 21.

The machine described in the foregoing operates as follows:

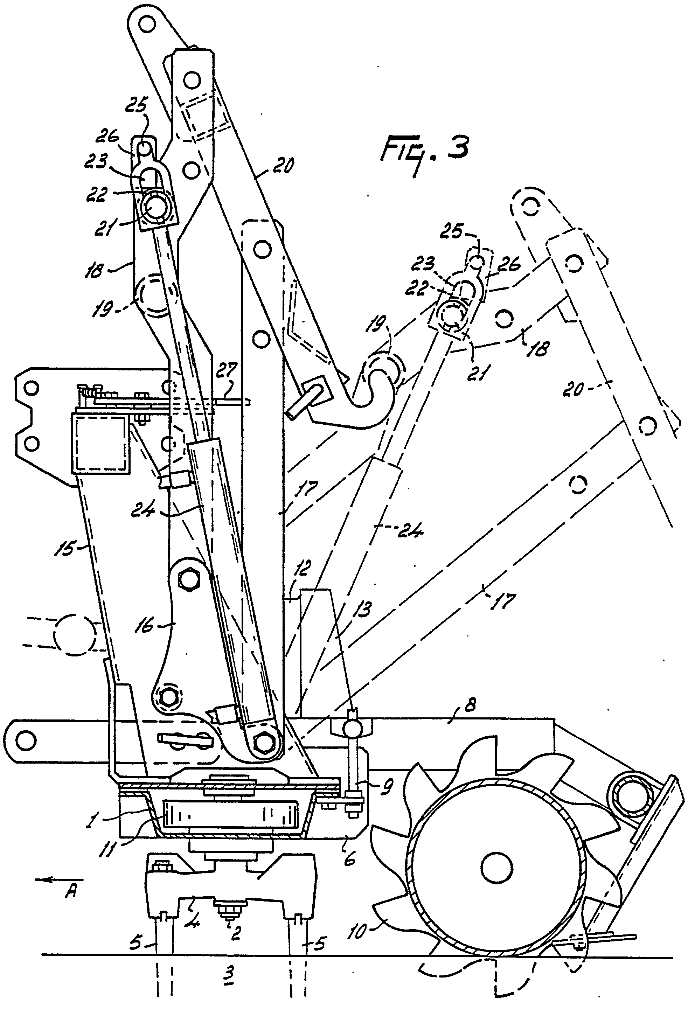

During operation, the machine is coupled to the three-point lifting hitch of a tractor by means of the trestle 15, and, via the intermediate shaft 14A and the above-described transmission, the adjacently arranged soil working members 3 can be rotated from the power take-off shaft of the tractor, the arrangement being such that adjacent soil working members rotate in opposite directions and, by means of their soil working elements 5, cultivate at least adjoining strips of soil. With the aid of the roller 10 and the pivotal arms 8 it is possible, before starting the operations, to set the appropriate working depth. When the machine is used in combination with an implement for sowing or planting, said implement is mounted on the rear side of the trestle 15 by means of the pair of arms 17 and 18, and the trestle 20. Each of the pairs of arms 17 and 18 constitutes a pivotal coupling member in the form of a hinging polygon, in particular a parallelogram. During operation, the arms 17 and 18 assume a position as shown in Figure 2. In this situation, the upper arms of the respective hinging polygons can move relative to the hydraulic cylinders 24 by means of the pins 21 and the slots 23, so that the seed drill or planting machine, which is usually supported by wheels of its own, can easily adapt itself to unevennesses of the soil and can travel independently of the soil cultivating machine. When the end of the field has been reached and the whole is to be lifted, the hydraulic adjusting cylinders 24 can be energized from the driver's seat, as a result of which the pins 21 move upwardly in the slots 23 until they reach the upper side of said slots, whereafter the arms 17 and 18 are moved upwardly and the whole of trestle 20 and seed drill or planting machine arrives in the position illustrated in Figure 3, in which position the pin 21 is located in the bottom part of the slot 23. In the transport position the arms 17 and 18 are locked by means of a pivotal locking pin 27. As is furthermore apparent from Figure 3, in the transport position the stop 26 is in a position in which the pin 21 is prevented from moving upwardly. If the operations are to be resumed again, the locking pins 27 can be pivoted away from the tractor, so that the arms 18 are unlocked and the assembly is pivoted to the rear by a downward movement of the piston rod of the adjusting cylinder 24. The shoulder 22 of the pin 21 then bears against the bottom side of the stop 26, as a result of which the pin 21 is retained in the lower part of the slot 23. Should the stop 26 not be present, the added implement, when in a position in the region of a position as indicated by broken lines in Figure 3, would cause, owing to its weight, the pin to move from the lower to the upper portion in the slot 23, thus, as has been found in practice, producing undesired shocks. Therefore, the construction according to the invention causes the added machine to be moved gradually to the operative position, in which position the stop 26 hangs down freely again.

## Claims

1. A soil cultivating machine comprising a frame wherein a plurality of rotary soil working members (3) are supported that are arranged in side-by-side relationship, which frame includes a trestle (15) for coupling the machine to the three-point lifting hitch of a tractor, whilst behind the trestle (15) there is arranged at least one pivotal coupling member (17, 18) for combination of the machine with a further implement, the said coupling member (17, 18) being adjustable in height by means of an adjusting cylinder (24) and the adjusting cylinder end connected to said pivotal coupling member (17, 18) being capable of limited movement relative to the said member, characterized in that the connection between the adjusting cylinder (24) and the pivotal coupling member (17, 18) includes a slot (23) which is present at the end of the adjusting cylinder (24) and is adapted to cooperate with a pin (21) on the pivotal coupling member (17, 18), and a stop (26) is provided freely pivotally on the relevant end of said adjusting cylinder (24), with the aid of which a movement of the relevant end of the adjusting cylinder (24) with respect to the coupling member (17, 18) is counteracted.

2. A soil cultivating machine as claimed in claim 1, characterized in that the stop (26) is in the shape of a strip and, in the transport position of the pivotal coupling member (17, 18), extends at least substantially in the extension of the slot (23).

3. A soil cultivating machine as claimed in claim 1 or 2, characterized in that the stop (26) is freely pivotal near the upper side and by means of its bottom side can cooperate with a shoulder (22) on the pin (21).

4. A soil cultivating machine as claimed in claim 3, characterized in that the stop (26) is of a length that is approximately equal to that of the slot (23) less the diameter of the shoulder (22) on the pin (21).

5. A soil cultivating machine as claimed in any one of the preceding claims, characterized in that the coupling member (17, 18) is constituted by a hinging polygon and the adjusting cylinder (24) is connected to the upper arm (18) of said polygon by means of the pin (21).

6. A soil cultivating machine as claimed in claim 5, characterized in that two adjacently-arranged hinging polygons (17, 18) are provided, which are each in the form of a parallelogram.

## Patentansprüche

1. Bodenbearbeitungsmaschine mit einem Gestell, an dem mehrere nebeneinander angeordnete Rotations-Arbeitsglieder (3) abgestützt sind und das zum Anschließen der Maschine an die Dreipunkt-Hebevorrichtung eines Schleppers einen Anbaubock (15) aufweist, hinter dem mindestens eine schwenkbare Kupplungsvorrichtung (17, 18) zur Kombination der Maschine mit einem weiteren Gerät angeordnet ist, wobei die Kupplungsvorrichtung (17, 18) mittels eines Stellzylinders (24) höhenverstellbar ist, dessen Ende mit der schwenkbaren Kupplungsvorrichtung (17, 18) begrenzt beweglich verbunden ist, dadurch gekennzeichnet, daß die Verbindung zwischen dem Stellzylinder (24) und der schwenkbaren Kupplungsvorrichtung (17, 18) einen Schlitz (23) enthält, der sich am Ende des Stellzylinders (24) befindet und mit einem an der schwenkbaren Kupplungsvorrichtung (17, 18) vorgesehenen Stift (21) zusammenwirkt, und daß an dem betreffenden Ende des Stellzylinders (24) frei schwenkbar ein Anschlag (26) vorgesehen ist, mit dem die Bewegung des betreffenden Endes des Stellzylinders (24) relativ zu der Kupplungsvorrichtung (17, 18) begrenzt wird.

2. Bodenbearbeitungsmaschine nach Anspruch 1, dadurch gekennzeichnet, daß der Anschlag (26) streifenförmig ist und sich in der Transportlage der schwenkbaren Kupplungsvorrichtung (17, 18) mindestens etwa in Richtung des Schlitzes (23) erstreckt.

3. Bodenbearbeitungsmaschine nach Anspruch 1 oder 2, dadurch gekennzeichnet, daß der Anschlag (26) nahe der Oberseite frei schwenkbar ist und mit seiner Unterseite mit einer Schulter (22) des Stiftes (21) zusammenwirken kann.

4. Bodenbearbeitungsmaschine nach Anspruch 3, dadurch gekennzeichnet, daß die Länge des Anschlages (26) annähernd gleich der Länge des Schlitzes (23) abzüglich des Durchmessers der Schulter (22) des Stiftes (21) ist.

5. Bodenbearbeitungsmaschine nach einem der vorhergehenden Ansprüche, dadurch gekennzeichnet, daß die Kupplungsvorrichtung (17, 18) als Gelenk-Mehreck ausgebildet ist und daß der Stellzylinder (24) mit dem oberen Lenker (18) des Gelenk-Mehrecks mittels des Stiftes (21) verbunden ist.

6. Bodenbearbeitungsmaschine nach Anspruch 5, dadurch gekennzeichnet, daß zwei benachbarte Gelenk-Mehrecke (17, 18) vorgesehen sind, die jeweils als Parallelogramm ausgebildet sind.

## Revendications

1. Machine pour cultiver le sol comprenant un chassis dans lequel sont portés plusieurs organes rotatifs de travail du sol (3) disposés côte à côte, ce chassis comportant un chevalet (15) pour atteler la machine au dispositif de levage à trois points d'un tracteur, tandis que derrière le chevalet (15) est disposé au moins un organe pivotant d'attelage (17, 18) pour combiner la machine avec un autre matériel, ledit organe d'attelage (17, 18) étant réglable en hauteur au moyen d'un vérin de réglage (24) et l'extrémité du vérin de réglage reliée audit organe pivotant d'attelage (17, 18) étant capable d'un mouvement limité par rapport audit organe, caractérisée en ce que la liaison entre le vérin de réglage (24) et l'organe pivotant d'attelage (17, 18) comprend une fenêtre allongée (23) qui est présente sur l'extrémité du vérin de réglage (24) et qui est adaptée pour coopérer avec un goujon (21) sur l'organe pivotant d'attelage (17, 18) et en ce qu'une butée (26) est prévue pour pivoter librement sur l'extrémité correspondante dudit vérin de réglage (24), à l'aide de laquelle un mouvement de l'extrémité correspondante du vérin de réglage (24) par rapport à l'organe d'attelage (17, 18) est neutralisé.

2. Machine pour cultiver le sol selon la revendication 1, caractérisée en ce que la butée (26) est sous la forme d'une barrette plate et en ce que, dans la position de transport de l'organe pivotant d'attelage (17, 18), elle s'étend au moins sensiblement dans le prolongement de la fenêtre (23).

3. Machine pour cultiver le sol selon la revendication 1 ou 2, caractérisée en ce que la butée (26) est librement pivotante près du côté supérieur et peut coopérer au moyen de son côté inférieur avec un épaulement (22) sur le goujon (21).

4. Machine pour cultiver le sol selon la revendication 3, caractérisée en ce que la butée (26) a une longueur approximativement égale à celle de la fenêtre (23), moins le diamètre de l'épaulement (22) sur le goujon (21).

5. Machine pour cultiver le sol selon l'une quelconque des revendications précédentes, caractérisée en ce que l'organe d'attelage (17, 18) est constitué par un polygone articulé et en ce que le vérin de réglage (24) est relié au bras supérieur (18) dudit polygone au moyen du goujon (21).

6. Machine pour cultiver le sol selon la revendication 5, caractérisée en ce que sont prévus deux polygones articulés (17, 18) disposés adjacents l'un à l'autre, qui sont chacun sous la forme d'un parallèlogramme.

FIG. 1

FIG. 2

FIG. 3